# EUROPÄISCHE PATENTSCHRIFT

(11) **EP 2 838 004 B1**
(45) Veröffentlichungstag und Bekanntmachung des Hinweises auf die Patenterteilung: **27.03.2019**
(21) Anmeldenummer: 14180478.1
(22) Anmeldetag: 11.08.2014
(51) Int. Cl.: G06F 3/0484, B60K 37/06

(54) **Bedienvorrichtung mit berührungsempfindlicher Oberfläche**
Control unit with touch sensitive surface
Dispositif de commande avec une surface tactile

(30) Priorität: 12.08.2013 DE 102013215905
(43) Veröffentlichungstag der Anmeldung: 18.02.2015
(73) Patentinhaber: Volkswagen Aktiengesellschaft, 38440 Wolfsburg (DE)
(72) Erfinder: Czelnik, Mark Peter, 38440 Wolfsburg (DE); Seitz, Gordon, 38468 Ehra-Lessien (DE); Kötter, Nils, 38126 Braunschweig (DE)

(56) Entgegenhaltungen:
- EP-A1- 2 196 359
- EP-A1- 2 305 507
- US-A1- 2011 061 023

## Beschreibung

Die vorliegende Erfindung betrifft ein Bedienvorrichtung, insbesondere in einem Fahrzeug. Sie umfasst ein Bedienelement und eine Steuervorrichtung. Bei dem Bedienelement ist eine berührungsempfindliche Oberfläche ausgebildet. Die Steuervorrichtung ist mit dem Bedienelement gekoppelt, so dass Daten zu Berührungen der berührungsempfindlichen Oberfläche an die Steuervorrichtung übertragbar sind.

Für Bedienvorrichtungen, die in einem Fahrzeug eingesetzt werden, ergeben sich spezielle Anforderungen, da die Betätigung der Bedienvorrichtung gegebenenfalls durch den Fahrer des Fahrzeugs erfolgt. Der Bedienvorgang sollte daher so einfach und intuitiv wie möglich ausführbar sein. Insbesondere sollte der Bedienvorgang nicht zu einer Ablenkung des Fahrers während der Fahrt führen, wenn dieser den Bedienvorgang ausführt.

Aus der EP 1 291 205 A1 ist eine Einstellvorrichtung für eine Klimaanlage in einem Fahrzeug bekannt. Die Einstelleinrichtung erlaubt individuelle Einstellungen. Das Einstellsystem umfasst insbesondere einen Touchscreen, der mit einer Steuervorrichtung gekoppelt ist, welche eine Lüftereinheit, Luftverteilungsventile und Temperatureinstellungen der Klimaanlage steuert.

Des Weiteren ist aus der DE 10 2004 029 203 A1 eine Bedienvorrichtung für ein Kraftfahrzeug bekannt, mit der ein Parameter kontinuierlich verändert werden kann. Beispielsweise kann der Maßstab einer Karte, eine Solltemperatur für eine Klimaanlage oder die Lautstärke verändert werden. Die Bedienvorrichtung umfasst einen Touchscreen und eine Anzeigesteuerung zur Steuerung des Touchscreens und zur Auswertung von mittels des Touchscreens erfolgten Eingaben. Mittels der Anzeigesteuerung ist ein Bedienfeld darstellbar. Der Parameter kann durch ein Streichen über das Bedienfeld verändert werden.

Ferner ist aus der DE 10 2008 000 405 A1 eine Benutzerschnittstelle zur Einstellung von Parametern für Klimaanlagen in Fahrzeugen bekannt. Als Parameter kann die Temperatur, die Luftverteilung und die Luftmenge eingestellt werden.
Weiterhin beschreibt die EP 2 305 507 A1 ein Verfahren zum Betreiben einer Bedienoberfläche in einem Fahrzeug, wobei auf einem Touchscreen eine Vielzahl von Funktionsschaltern angezeigt wird. Durch Antippen eines angezeigten Funktionsschalters verändert sich die Bedienoberfläche so, dass die zugeordnete Funktion bedient werden kann. Es können weitere Eingaben zu der Funktion erfasst werden. Zur Bedienung ist vorgesehen, dass der Nutzer einen Bereich auf dem Touchscreen antippen oder eine Wischgeste ausführen kann. Hierbei kann auch ein Zahlenwert für eine Funktion eingestellt werden, wobei die Veränderung eines Werts bei einer Wischgeste in Abhängigkeit von der Länge und Dynamik der erfassten Bewegung erfolgt.

Bei dem in der EP 2 196 359 A1 beschriebenen Bedienverfahren wird eine Schaltfläche zum Verändern eines Einstellparameters auf einer Anzeigefläche dargestellt. Der Parameter wird durch eine Wischgeste verändert, die nacheinander sowohl in einem Bereich der Schaltfläche als auch in einem Bereich außerhalb der Schaltfläche ausgeführt wird.

Schließlich offenbart auch die US 2011/061023 A1 ein elektronisches Gerät, wie beispielsweise eine digitale Kamera oder einen Portable Media Player, mit einem Touch-Panel, das ein Bild anzeigt und eine Bedienung auf einer Oberfläche des Berührungsfelds erfasst, wobei das durch das Berührungsfeld angezeigte Bild gemäß einer erfassten Position der Berührung geändert wird.

Der vorliegenden Erfindung liegt die Aufgabe zugrunde, eine Bedienvorrichtung der eingangs genannten Art bereitzustellen, welche sich einfach und intuitiv bedienen lässt.

Erfindungsgemäß wird diese Aufgabe durch eine Bedienvorrichtung mit den Merkmalen des Anspruchs 1 gelöst. Vorteilhafte Ausgestaltungen und Weiterbildungen ergeben sich aus den abhängigen Ansprüchen.

Die erfindungsgemäße Bedienvorrichtung ist dadurch gekennzeichnet, dass innerhalb der berührungsempfindlichen Oberfläche zumindest zwei getrennte Flächen ausgebildet sind. Die Steuervorrichtung ist so ausgebildet, dass ein Parameter inkrementell verändert wird, wenn erfasst wurde, dass eine der zumindest zwei getrennten Flächen berührt wurde, und derselbe Parameter inkrementell verändert wird, wenn erfasst wurde, dass eine Streichgeste auf der berührungsempfindlichen Oberfläche ausgeführt wurde.

Insbesondere bei dem Einsatz der erfindungsgemäßen Bedienvorrichtung in einem Fahrzeug stellt die Verstellung von Parametern speziell beim Fahrer während der Fahrt hohe Anforderungen an die kognitiven und motorischen Fähigkeiten des Fahrers. Zur Erhöhung der Sicherheit während der Fahrt erfolgt daher bei der erfindungsgemäßen Bedienvorrichtung die Verstellung des Parameters inkrementell, das heißt in Schritten und nicht kontinuierlich. Hierdurch wird eine exakte Positionierung beispielsweise einer Markierung vermieden. Ein solcher Vorgang erfordert nämlich eine hohe Aufmerksamkeit während der Bedienung.

Das Bedienelement der erfindungsgemäßen Bedienvorrichtung kann vorteilhafterweise auf verschiedene Arten betätigt werden, um den Parameter inkrementell zu verändern. Zum einen können die getrennten Flächen durch eine einfache Berührung betätigt werden, um den Parameter zu verändern. Zum anderen kann derselbe Parameter durch eine Streichgeste auf der berührungsempfindlichen Oberfläche verändert werden. Es wird somit eine kombinierte Eingabefläche bereitgestellt.

Gemäß einer Weiterbildung der erfindungsgemäßen Bedienvorrichtung wird bei der Streichgeste die berührungsempfindliche Oberfläche mit einem Betätigungsobjekt bei einer ersten Position berührt, dann wird das Betätigungsobjekt auf der berührungsempfindlichen Oberfläche bewegt und schließlich verlässt es die berührungsempfindliche Oberfläche bei einer zweiten Position. Die Streichgeste kann dabei über die gesamte Erstreckung der berührungsempfindlichen Oberfläche in einer Richtung erfolgen. Das Aufsetzen des Betätigungsobjekts kann dabei auch außerhalb der berührungsempfindlichen Oberfläche erfolgen, woraufhin das Betätigungsobjekt zu der berührungsempfindlichen Oberfläche bewegt wird, so dass die erste Position, bei der es die berührungsempfindliche Oberfläche berührt, am Rand dieser berührungsempfindlichen Oberfläche liegt. Gleichermaßen kann das Betätigungsobjekt auch außerhalb von der berührungsempfindlichen Oberfläche wieder abgehoben werden. Auf diese Weise kann der Nutzer vorteilhafterweise die Streichgeste sehr flexibel ausführen, ohne dass es erforderlich ist, dass das Betätigungsobjekt bei einer bestimmten Position exakt aufgesetzt wird und bei einer anderen Position wieder abgehoben wird. Hierdurch wird es dem Fahrer ermöglicht, die Streichgeste im Wesentlichen ohne Blickkontakt zu dem Bedienelement der erfindungsgemäßen Bedienvorrichtung auszuführen.

Gemäß der erfindungsgemäßen Bedienvorrichtung ist die Steuervorrichtung so ausgebildet, dass der Parameter inkrementell um eine Einheit verändert wird, wenn erfasst wurde, dass eine der zumindest zwei getrennten Flächen berührt wurde. Die inkrementelle Veränderung des Parameters erfolgt insbesondere dann, wenn eine der zumindest zwei getrennten Flächen angetippt wurde, das heißt die Fläche von einem Betätigungsobjekt berührt wird, dieses bei der Fläche kurz verweilt und dann die Berührung wieder bei der Fläche gelöst wird. Diese Art der Betätigung des Bedienelements der erfindungsgemäßen Steuervorrichtung entspricht der Betätigung eines Druckschalters oder Tastschalters. Im Gegensatz zu der Streichgeste gibt es dabei im Wesentlichen keine Bewegung auf der Oberfläche. Insbesondere werden nicht Bereiche der berührungsempfindlichen Oberfläche sowohl innerhalb als auch außerhalb einer der Flächen berührt.

Gemäß der erfindungsgemäßen Bedienvorrichtung ist die Steuervorrichtung so ausgebildet, dass der Parameter inkrementell um eine Einheit verändert wird, wenn erfasst wurde, dass die Streichgeste auf der berührungsempfindlichen Oberfläche ausgeführt wurde. Auf diese Weise kann der Nutzer sehr schnell und intuitiv den Parameter um eine Einheit verändern, ohne dass es auf die Länge oder Geschwindigkeit der Berührung der berührungsempfindlichen Oberfläche während des Ausführens der Streichgeste ankäme. Der Nutzer kann die Streichgeste daher sehr schnell und intuitiv ausführen.

Gemäß der erfindungsgemäßen Bedienvorrichtung ist die Steuervorrichtung so ausgebildet, dass der Parameter inkrementell um eine Einheit erhöht wird, wenn erfasst wurde, dass die eine der zumindest zwei getrennten Flächen berührt wurde, und der Parameter inkrementell um eine Einheit erniedrigt wird, wenn erfasst wurde, dass die andere der zumindest zwei getrennten Flächen berührt wurde. Die beiden Flächen entsprechen in diesem Fall Tastschaltern oder Druckschaltern, welche den Parameter um eine Einheit erhöhen oder erniedrigen. Diese Metapher zu mechanischen Bedienelementen erleichtert es dem Nutzer, das Bedienelement der erfindungsgemäßen Bedienvorrichtung schnell und intuitiv zu bedienen.

Die Steuervorrichtung ist ferner so ausgebildet, dass der Parameter inkrementell um eine Einheit erhöht wird, wenn erfasst wurde, dass die Streichgeste auf der berührungsempfindlichen Oberfläche in einer ersten Richtung ausgeführt wurde. Der Parameter wird hingegen inkrementell um eine Einheit erniedrigt, wenn erfasst wurde, dass die Streichgeste auf der berührungsempfindlichen Oberfläche in einer zweiten Richtung ausgeführt wurde. Die erste und die zweite Richtung unterscheiden sich. Vorteilhafterweise ist die erste Richtung im Wesentlichen entgegengesetzt zu der zweiten Richtung. Der Nutzer kann auf diese Weise einfach und intuitiv in eine Richtung über die berührungsempfindliche Oberfläche streichen, um den Parameter um eine Einheit zu erhöhen und in die entgegengesetzte Richtung streichen, um den Parameter um eine Einheit zu erniedrigen.

Gemäß der erfindungsgemäßen Bedienvorrichtung ist innerhalb der berührungsempfindlichen Oberfläche ein Beschriftungselement angeordnet. Hiervon ist die Anzeige einer Beschriftung umfasst, wenn die berührungsempfindliche Oberfläche auf einer Anzeigefläche vorgesehen ist, das heißt, wenn ein sogenannter Touchscreen vorgesehen ist. Durch die Anordnung des Beschriftungselements innerhalb der berührungsempfindlichen Oberfläche erreicht man, dass der Nutzer die Bedienfunktion, welche dem Bedienelement zugeordnet ist, einfach und schnell erfassen kann.

Gemäß einer Ausgestaltung der erfindungsgemäßen Bedienvorrichtung ist die berührungsempfindliche Oberfläche des Bedienelements in einem Bereich innerhalb einer größeren berührungsempfindlichen Oberfläche gebildet. Das Bedienelement kann somit ein Schaltelement innerhalb einer größeren berührungsempfindlichen Oberfläche sein. Hierdurch kann man das Bedienelement sehr einfach in die Bedienung beispielsweise über einen Touchscreen integrieren.

Gemäß einer anderen Ausgestaltung der erfindungsgemäßen Bedienvorrichtung ist das Bedienelement mechanisch betätigbar. In diesem Fall ist die berührungsempfindliche Oberfläche insbesondere auf einer Stirnfläche des Bedienelements angeordnet. Das Bedienelement kann in diesem Fall beispielsweise ein Drehsteller oder ein Drehdrücksteller sein, welcher ein zylindrisches Bedienteil umfasst. Die berührungsempfindliche Oberfläche kann dann auf der Stirnfläche dieses zylindrischen Bedienteils ausgebildet sein.

Die Erfindung betrifft des Weiteren ein Fahrzeug, insbesondere ein Kraftfahrzeug, mit der vorstehend beschriebenen Bedienvorrichtung. In diesem Fall kann das Bedienelement in der Mittelkonsole des Fahrzeugs angeordnet sein oder im Lenkrad des Fahrzeugs integriert sein.

Vorteilhaft an der erfindungsgemäßen Bedienvorrichtung ist insbesondere, dass die Streichgeste zur inkrementellen Verstellung des Parameters so genutzt werden kann, dass sie nicht durch den Fahrer dauerhaft kontrolliert werden muss, wenn dieser die Streichgeste ausführt. Einmal streichen heißt in diesem Fall, dass der Parameter um eine Einheit verändert wird. Des Weiteren ergibt sich bei der Verwendung der erfindungsgemäßen Bedienvorrichtung eine Platzersparnis, da kein separater Bereich für die Streichgeste nötig ist. Ferner ergibt sich für den Nutzer ein reduzierter Lernaufwand für die Bedienung, da sowohl eine Gestenbedienung als auch eine Verstellung über inkrementelle Schaltelemente möglich ist. Außerdem wird das Risiko von Fehlbedienungen reduziert, da insbesondere bei der Nutzung der Streichgeste die Verweildauer des Betätigungselements auf der berührungsempfindlichen Oberfläche größer ist.

Ein Ausführungsbeispiel der Erfindung wird nun mit Bezug zu den Zeichnungen erläutert.
- Figur 1: zeigt schematisch den Aufbau eines Ausführungsbeispiels der erfindungsgemäßen Bedienvorrichtung und deren Kopplung mit Einrichtungen des Fahrzeugs,
- Figur 2: zeigt ein alternatives Beispiel des Bedienelements der erfindungsgemäßen Bedienvorrichtung,
- Figur 3: zeigt das Bedienelement des Ausführungsbeispiels der erfindungsgemäßen Bedienvorrichtung,
- Figuren 4 bis 7: zeigen die Betätigung des Bedienelements des Ausführungsbeispiels der erfindungsgemäßen Bedienvorrichtung,
- Figur 8: zeigt mehrere Bedienelemente eines Ausführungsbeispiels der erfindungsgemäßen Bedienvorrichtung,
- Figur 9: zeigt ein alternatives Bedienelement der erfindungsgemäßen Bedienvorrichtung und
- Figuren 10 und 11: zeigen ein Beispiel der Integration des Bedienelements der erfindungsgemäßen Bedienvorrichtung in das Lenkrad eines Fahrzeugs.

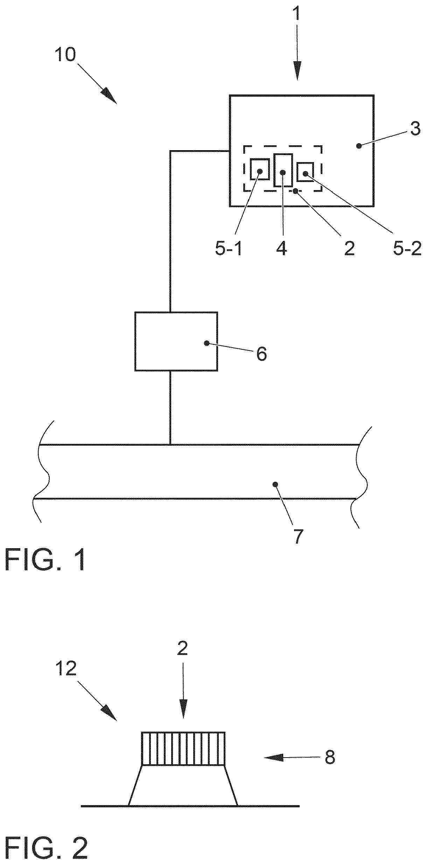

Mit Bezug zu Figur 1 wird der grundsätzliche Aufbau des Ausführungsbeispiels der Bedienvorrichtung 10 erläutert:
Die Bedienvorrichtung 10 umfasst ein Bedienelement 1 und eine Steuervorrichtung 6, die mit dem Bedienelement 1 gekoppelt ist. Bei dem Bedienelement 1 ist eine berührungsempfindliche Oberfläche 2 ausgebildet. Die berührungsempfindliche Oberfläche 2 stellt einen Bereich einer größeren berührungsempfindlichen Oberfläche 3 dar. Die berührungsempfindliche Oberfläche 3 kann auf einer Anzeigefläche ausgebildet sein, so dass ein sogenannter Touchscreen bereitgestellt wird. Innerhalb der berührungsempfindlichen Oberfläche 2 sind zwei getrennte Flächen 5-1 und 5-2 ausgebildet, die zusammen auch mit 5 bezeichnet werden. Zwischen den beiden Flächen 5-1 und 5-2 ist ein Beschriftungsfeld 4 angeordnet. Bei diesem Beschriftungsfeld 4 kann von der Anzeigefläche, auf welcher die berührungsempfindliche Oberfläche 2 angeordnet ist eine bestimmte Beschriftung angezeigt werden, welche dem Bedienelement 1 zugeordnet ist.

Mittels der Steuervorrichtung 6 kann die Position der Berührung eines Betätigungsobjekts auf der berührungsempfindlichen Oberfläche 2 erfasst werden. Ferner kann die zeitliche Entwicklung dieser Berührung erfasst werden.

Die Steuervorrichtung 6 ist ferner mit einem Datenbus 7 des Fahrzeugs gekoppelt, in welches die Bedienvorrichtung 10 integriert ist. Auf diese Weise kann die Steuervorrichtung 6 Eingaben, welche über die berührungsempfindliche Oberfläche 2 getätigt wurden, in Steuersignale für Einrichtungen des Fahrzeugs umsetzen.

In Figur 2 ist eine alternative Ausgestaltung eines Bedienelements 12 der erfindungsgemäßen Bedienvorrichtung 10 gezeigt. Bei dem Bedienelement 12 handelt es sich um einen mechanischen Drehsteller bzw. einen mechanischen Dreh-Drück-Steller. Das Bedienelement 12 umfasst ein Bedienteil 8, welches eine zylindrische Form aufweist und welches drehbar gelagert ist. Auf der Stirnfläche des Bedienteils 8 ist bei dieser Ausgestaltung des Bedienelements 12 die berührungsempfindliche Oberfläche 2 ausgebildet.

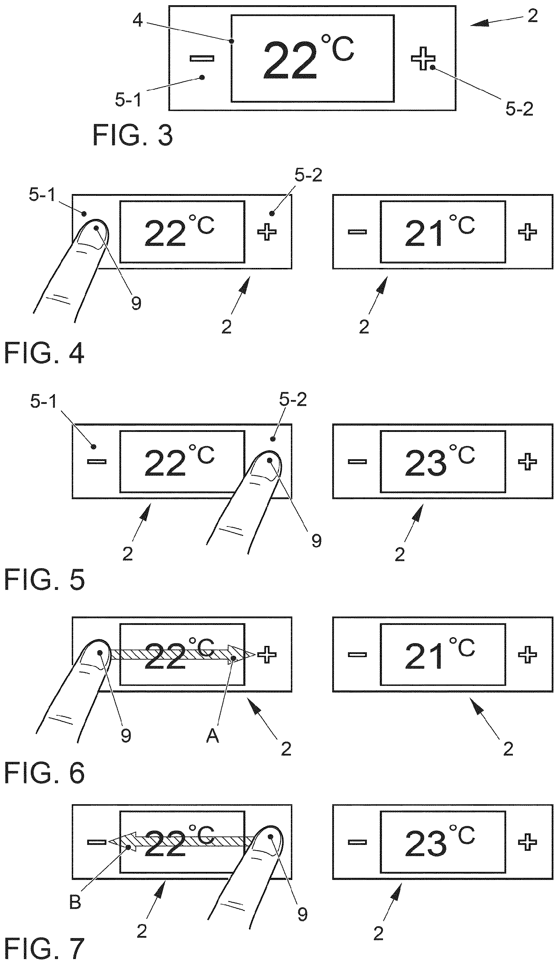

In Figur 3 ist die berührungsempfindliche Oberfläche 2 des Bedienelements 1 gezeigt. Auf gleiche Weise kann die berührungsempfindliche Oberfläche jedoch auch bei dem in Figur 2 gezeigten Bedienelement 12 eingesetzt werden. Die separaten Flächen 5-1 und 5-2 sind mit den Zeichen "-" und "+" beschriftet. Das Beschriftungsfeld 4 zwischen den beiden Flächen 5-1 und 5-2 enthält eine Temperaturanzeige. Mittels des Bedienelements 1 kann in diesem Fall die Temperatur im Fahrzeug eingestellt werden, wie es im Folgenden mit Bezug zu den Figuren 4 bis 7 erläutert wird:
In diesem Fall sind zwei berührungsempfindliche Oberflächen 2 für die Temperatureinstellung auf der linken und der rechten Seite des Fahrzeugs vorgesehen. Im vorliegenden Fall verstellt zum Beispiel der Fahrer die Temperatur im Fahrzeug auf der linken Seite. Hierfür bietet das Bedienelement 1 verschiedene Möglichkeiten.

Der Fahrer kann zum einen mit seiner Fingerspitze 9 als Betätigungsobjekt die Flächen 5-1 bzw. 5-2 antippen, um die Solltemperatur für die Klimatisierungsvorrichtung des Fahrzeugs um ein Grad zu erhöhen oder ein Grad zu erniedrigen. Tippt der Fahrer mit seiner Fingerspitze 9, wie in Fig. 4 gezeigt, kurz die Fläche 5-1 der berührungsempfindlichen Oberfläche 2 an, wird dies von der Steuervorrichtung 6 erfasst und in ein Steuersignal für die Klimatisierungsvorrichtung des Fahrzeugs umgesetzt, welches die Solltemperatur um eine Einheit, z. B. um 1°C, erniedrigt. Ferner kann die Steuervorrichtung 6 das Beschriftungsfeld 4 so ansteuern, dass die Anzeige entsprechend auf die neue Solltemperatur angepasst wird.

Andererseits kann der Fahrer mit seiner Fingerspitze 9 die Fläche 5-2 kurz antippen, wie es in Figur 5 gezeigt ist. Dies wird von der Steuervorrichtung 6 erfasst und in ein Steuersignal für die Klimatisierungsvorrichtung des Fahrzeugs umgesetzt, welches die Solltemperatur um eine Einheit, z. B. um 1°C, erhöht. Auch in diesem Fall kann die Steuervorrichtung 6 das Beschriftungsfeld 4 entsprechend anpassen.

Bei dem Antippen der Fläche 5-1 oder 5-2 berührt der Nutzer mit seiner Fingerspitze 9 die Fläche 5-1 bzw. 5-2, verweilt dort für eine gewisse kurze Zeit und verlässt dann die berührungsempfindliche Oberfläche 2 wieder bei derselben Fläche 5-1 bzw. 5-2.

Der Nutzer kann jedoch auch auf andere Art und Weise denselben Parameter, das heißt die Solltemperatur, inkrementell erhöhen oder erniedrigen. Er kann eine Streichgeste auf der berührungsempfindlichen Oberfläche 2 ausführen. Wie in Figur 6 gezeigt kann der Nutzer mit seiner Fingerspitze 9 die berührungsempfindliche Oberfläche 2 an einer beliebigen Stelle berühren und dann auf der berührungsempfindlichen Oberfläche 2 eine Bewegung in einer ersten Richtung, beispielsweise nach rechts wie in Figur 6 durch den Pfeil A angezeigt, bewegen. Nach dieser Streichbewegung löst der Nutzer wieder seine Fingerspitze 9 von der berührungsempfindlichen Oberfläche 2. Auf diese Weise wird eine Streichgeste ausgeführt. Dabei berührt der Nutzer mit seiner Fingerspitze 9 die berührungsempfindliche Oberfläche 2 zumindest abschnittsweise in einem Bereich außerhalb der Flächen 5-1 und 5-2. Auf diese Weise kann die Steuervorrichtung 6 die Streichgeste von der vorstehend beschriebenen Antippgeste bzw. Antippbetätigung unterscheiden. Bei einer Streichgeste in Richtung des Pfeils A wird die Solltemperatur um eine Einheit, z. B. um 1°C, erhöht. Wenn der Nutzer hingegen, wie in Figur 7 gezeigt, eine Streichgeste in Richtung des Pfeils B in die entgegengesetzte Richtung ausführt, wird die Solltemperatur um eine Einheit, z. B. um 1°C, erniedrigt.

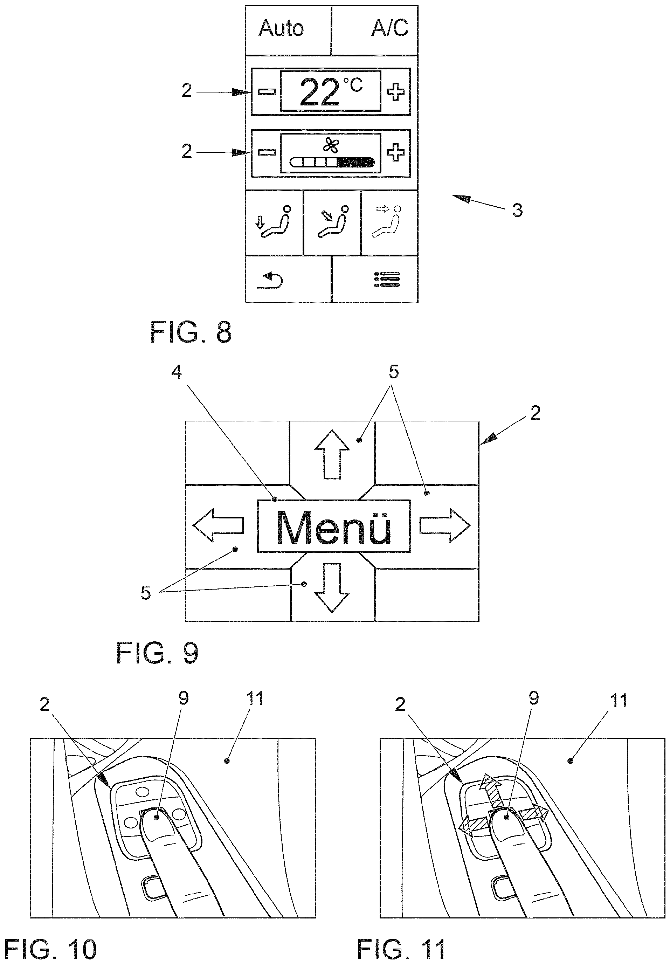

In Figur 8 ist eine berührungsempfindliche Oberfläche 3 eines Ausführungsbeispiels der erfindungsgemäßen Bedienvorrichtung 10 gezeigt, in welcher zwei berührungsempfindliche Oberflächen 2 für Bedienelemente 1 ausgebildet sind. Die beiden berührungsempfindlichen Oberflächen 2 dienen der Einstellung der Solltemperatur und der Stärke der Luftzufuhr der Klimatisierungsvorrichtung des Fahrzeugs. Sie werden, wie vorstehend mit Bezug zu den Figuren 4 bis 7 erläutert, betätigt.

In Figur 9 ist ein weiteres Ausführungsbeispiel der erfindungsgemäßen Bedienvorrichtung 10 mit einer berührungsempfindlichen Oberfläche 2 gezeigt. In diesem Fall sind innerhalb der berührungsempfindlichen Oberfläche 2 vier getrennte Flächen 5 ausgebildet, über welche zwei verschiedene Parameter erhöht bzw. erniedrigt werden können. In der Mitte ist ein Beschriftungsfeld 4 vorgesehen.

Die Parameter können in diesem Fall durch Antippen der Flächen 5 verstellt werden oder durch Streichgesten nach rechts, nach links, nach oben und nach unten. Die Streichgesten zeichnen sich in diesem Fall dadurch aus, dass sie jeweils einen Bereich außerhalb eines bestimmten Feldes 5 der vier Felder 5 berühren. Beispielsweise kann bei einer Streichgeste von unten nach oben zunächst das untere Feld 5, dann das Beschriftungsfeld 4 und dann das obere Feld 5 berührt werden. Andererseits kann bei einer horizontalen Streichgeste zunächst das linke Feld 5, dann das Beschriftungsfeld 4 und schließlich das rechte Feld 5 berührt werden.

In den Figuren 10 und 11 ist ein Beispiel gezeigt, bei dem das Bedienelement 1 in das Lenkrad 11 des Fahrzeugs integriert ist. In diesem Fall ist die berührungsempfindliche Oberfläche 2, wie sie in Figur 9 gezeigt ist, auf der Oberfläche des Lenkrads 11 vorgesehen. Der Nutzer kann, wie in Figur 10 gezeigt, die Flächen 5 antippen oder, wie in Figur 11 gezeigt, Streichgesten auf der berührungsempfindlichen Oberfläche 2 ausführen.

### BEZUGSZEICHENLISTE

- 1: Bedienelement
- 2: berührungsempfindliche Oberfläche
- 3: größere berührungsempfindliche Oberfläche
- 4: Beschriftungsfeld
- 5-1,5-2,5: Flächen
- 6: Steuervorrichtung
- 7: Datenbus
- 8: Bedienteil
- 9: Betätigungsobjekt; Fingerspitze
- 10: Bedienvorrichtung
- 11: Lenkrad
- 12: Bedienelement

## Patentansprüche

1. Bedienvorrichtung (10), insbesondere in einem Fahrzeug, mit
- einem Bedienelement (1, 12), bei dem eine berührungsempfindliche Oberfläche (2) ausgebildet ist, und
- einer Steuervorrichtung (6), die mit dem Bedienelement (1, 12) gekoppelt ist, so dass Daten zu Berührungen der berührungsempfindlichen Oberfläche (2) an die Steuervorrichtung (6) übertragbar sind,
**dadurch gekennzeichnet, dass**
- innerhalb der berührungsempfindlichen Oberfläche (2) zwei getrennte Flächen (5-1, 5-2) ausgebildet sind und zwischen den zwei getrennten Flächen (5-1, 5-2) ein Beschriftungsfeld (4) angeordnet ist, auf dem der Wert eines Parameters angezeigt wird, und
- die Steuervorrichtung (6) so ausgebildet ist, dass
ein Parameter inkrementell um eine Einheit verändert wird, wenn eine Antippgeste oder Streichgeste erfasst wurde, wobei der Parameter bei einer erfassten Antippgeste erniedrigt wird, wenn eine erste der zwei getrennten Flächen (5-1) berührt wurde, und der Parameter erhöht wird, wenn die zweite der zwei getrennten Flächen (5-2) berührt wurde, und derselbe Parameter bei einer erfassten Streichgeste erhöht wird, wenn die Streichgeste in Richtung von der ersten zu der zweiten der getrennten Flächen ausgeführt wurde, und der Parameter erniedrigt wird, wenn die Streichgeste in entgegengesetzter Richtung ausgeführt wurde, und
die Streichgeste von der Antippgeste dadurch unterschieden wird, dass bei einer Streichgeste die berührungsempfindliche Oberfläche (2) zumindest abschnittsweise in einem Bereich außerhalb der zwei getrennten Flächen (5-1, 5-2) berührt wird, und
das Beschriftungsfeld (4) so ansteuert wird, dass der veränderte Parameter angezeigt wird.

2. Bedienvorrichtung (10) nach Anspruch 1,
**dadurch gekennzeichnet,**
**dass** bei der Streichgeste die berührungsempfindliche Oberfläche (2) mit einem Betätigungsobjekt (9) bei einer ersten Position berührt wird, dann das Betätigungsobjekt (9) auf der berührungsempfindlichen Oberfläche (2) bewegt wird und die berührungsempfindliche Oberfläche (2) bei einer zweiten Position verlässt.

3. Bedienvorrichtung (10) nach einem der Ansprüche 1 oder 2,
**dadurch gekennzeichnet,**
**dass** die berührungsempfindliche Oberfläche (2) des Bedienelements (1) einen Bereich innerhalb einer größeren berührungsempfindlichen Oberfläche (3) bildet.

4. Bedienvorrichtung (10) nach einem der vorhergehenden Ansprüche,
**dadurch gekennzeichnet,**
**dass** das Bedienelement (12) ferner mechanisch betätigbar ist.

5. Bedienvorrichtung (10) nach Anspruch 4,
**dadurch gekennzeichnet,**
**dass** die berührungsempfindliche Oberfläche (2) auf einer Stirnfläche des Bedienelements (12) angeordnet ist.

## Claims

1. Operator control apparatus (10), in particular in a vehicle, having
- an operator control element (1, 12), in the case of which a touch-sensitive surface (2) is produced, and
- a control apparatus (6) coupled to the operator control element (1, 12), so that data pertaining to touches of the touch-sensitive surface (2) are transmittable to the control apparatus (6), **characterized in that**
- two separate areas (5-1, 5-2) are produced within the touch-sensitive surface (2), and the two separate areas (5-1, 5-2) have an inscription box (4) arranged between them that is used to display the value of a parameter, and
- the control apparatus (6) is designed such that
a parameter is altered incrementally by one unit if a tap gesture or swipe gesture has been detected, wherein the parameter is lowered in the event of a detected tap gesture if a first of the two separate areas (5-1) has been touched, and the parameter is raised if the second of the two separate areas (5-2) has been touched, and the same parameter is raised in the event of a detected swipe gesture if the swipe gesture has been carried out in a direction from the first to the second of the separate areas, and the parameter is lowered if the swipe gesture has been carried out in the opposite direction, and
the swipe gesture is distinguished from the tap gesture **in that** a swipe gesture involves at least sections of the touch-sensitive surface (2) being touched in a region outside the two separate areas (5-1, 5-2), and
the inscription box (4) is actuated such that the altered parameter is displayed.

2. Operator control apparatus (10) according to Claim 1,
**characterized**
**in that** the swipe gesture involves the touch-sensitive surface (2) being touched with an operating object (9) at a first position, then the operating object (9) being moved on the touch-sensitive surface (2) and leaving the touch-sensitive surface (2) at a second position.

3. Operator control apparatus (10) according to either of Claims 1 and 2,
**characterized**
**in that** the touch-sensitive surface (2) of the operator control element (1) forms a region within a larger touch-sensitive surface (3).

4. Operator control apparatus (10) according to one of the preceding claims,
**characterized**
**in that** the operator control element (12) is further mechanically operable.

5. Operator control apparatus (10) according to Claim 4,
**characterized**
**in that** the touch-sensitive surface (2) is arranged on an end face of the operator control element (12).

## Revendications

1. Dispositif de commande (10), notamment dans un véhicule, comprenant
- un élément de commande (1, 12) au niveau duquel est formée une surface tactile (2) et
- un dispositif de contrôle (6) qui est connecté à l'élément de commande (1, 12), de sorte que des données à propos des touchers de la surface tactile (2) peuvent être transmises au dispositif de contrôle (6), **caractérisé en ce que**
- deux surfaces (5-1, 5-2) séparées sont formées à l'intérieur de la surface tactile (2) et entre les deux surfaces (5-1, 5-2) séparées est disposé un champ de marquage (4) sur lequel est affichée la valeur d'un paramètre, et
- le dispositif de contrôle (6) est configuré de telle sorte que
un paramètre est modifié par incrément d'une unité lorsqu'un geste d'effleurement ou un geste de balayage a été détecté, le paramètre étant diminué dans le cas de la détection d'un geste d'effleurement lorsqu'une première des deux surfaces (5-1) séparées est touchée, et le paramètre étant augmenté lorsque la deuxième des deux surfaces (5-2) séparées est touchée et, dans le cas de la détection d'un geste de balayage, le même paramètre étant augmenté lorsque le geste de balayage a été accompli dans la direction de la première vers la deuxième surface séparée et le paramètre étant diminué lorsque le geste de balayage a été accompli dans la direction opposée, et
le geste de balayage est distingué du geste d'effleurement **en ce que** dans le cas d'un geste de balayage, la surface tactile (2) est touchée au moins dans certaines portions dans une zone en-dehors des deux surfaces (5-1, 5-2) séparées, et
le champ de marquage (4) est piloté de telle sorte que le paramètre modifié est affiché.

2. Dispositif de commande (10) selon la revendication 1, **caractérisé en ce que** lors du geste de balayage, la surface tactile (2) est touchée à une première position avec un objet d'actionnement (9), ensuite l'objet d'actionnement (9) est déplacé sur la surface tactile (2) et quitte la surface tactile (2) à une deuxième position.

3. Dispositif de commande (10) selon l'une des revendications 1 ou 2, **caractérisé en ce que** la surface tactile (2) de l'élément de commande (1) forme une zone à l'intérieur d'une surface tactile (3) plus grande.

4. Dispositif de commande (10) selon l'une des revendications précédentes, **caractérisé en ce que** l'élément de commande (12) peut en outre être actionné mécaniquement.

5. Dispositif de commande (10) selon la revendication 4, **caractérisé en ce que** la surface tactile (2) est disposée sur une face frontale de l'élément de commande (12).
